# EUROPEAN PATENT APPLICATION

(11) **EP 2 031 774 A1**
(43) Date of publication of application: **04.03.2009**
(21) Application number: 06757341.0
(22) Date of filing: 15.06.2006
(51) Int. Cl.: H04B 7/26

(54) **RADIO COMMUNICATION SYSTEM**

(71) Applicant: Fujitsu Limited, Kawasaki-shi, Kanagawa 211-8588 (JP)
(72) Inventor: KAWASAKI, Yoshihiro, Kawasaki-shi, Kanagawa 2118588 (JP)
(74) Representative: Stebbing, Timothy Charles
(86) International application number: PCT/JP2006/311993
(87) International publication number: WO 2007/144947

(57) **Abstract**

In a radio communication system in which unicast data and multicast data are transmitted on an identical carrier (carrier wave) inatime-division multiplexed manner, each terminal transmits a signal in an uplink time interval corresponding to a time interval in which multicast data is transmitted on the downlink either autonomously or according to an instruction from a base station. The signals to be transmitted include random access signal, measurement result signal of downlink radio channel, and pilot signal for measuring uplink radio channel quality, for example.

## Description

### FIELD OF THE INVENTION

The present invention relates to a radio communication system in which unicast data and multicast data are transmitted on a downlink over an identical carrier (carrier wave) in a time-division multiplexed manner.

### BACKGROUND ART

In EUTRAN (Evolved UTRAN), which is under study as a next-generation mobile communication system of the 3GPP system, OFDM (Orthogonal Frequency Division Multiplexing) is used on the downlink (DL). OFDM is one multicarrier transmission method in which data are transmitted in parallel on a plurality of carrier waves (subcarriers). By utilizing orthogonality between the subcarriers, each subcarrier can be separated at the receiving side even if a part of subcarrier frequency bands are overlapped. Thus, it is possible to achieve efficient frequency utilization with high-speed transmission. (As for detailed standard, refer to Non-patent document 1 shown below.)

According to the OFDM transmission in EUTRAN, two types of OFDM signals having different CP (cyclic prefix, which is synonymous to guard interval length (GI)) are used. A sub-frame in which CP is configured of long OFDM signal symbols is defined as long CP sub-frame (or extended CP sub-frame), while a sub-frame in which CP is configured of short OFDM signal symbols is defined as short CP sub-frame (or normal CP sub-frame). The long CP sub-frame and the short CP sub-frame respectively have 0.5 ms duration. One long CP sub-frame is constituted of six (6) OFDM signal symbols, while one short CP sub-frame is constituted of seven (7) OFDM signal symbols.

As CP becomes longer, it is possible to reduce the deterioration of a receiving characteristic due to inter-symbol interference caused by a delay wave in a propagation environment having a larger delay amount of the delay wave (arrival time difference between a main wave and the delay wave thereof at the receiving side) . In general, the larger the radius of a cell, a communicable area of one radio base station (hereafter referred to as "base station"), is, the more the delay amount increases. Therefore, in a cell having a large radius, it is preferable to use an OFDM signal having a sufficiently long CP. In EUTRAN, data transmitted from the base station are broadly classified into two categories : unicast data for individual transmission to each user, and multicast data for simultaneous transmission to a plurality of users. The multicast data include multimedia data such as news, weather forecast, sport relay broadcast, movies, moving images for advertising movies, etc. Further, the multicast data are classified into data to be transmitted inside a certain cell only (cell-specific multicast data) and data having identical contents for simultaneous transmission to a plurality of cells (cell-common multicast data).

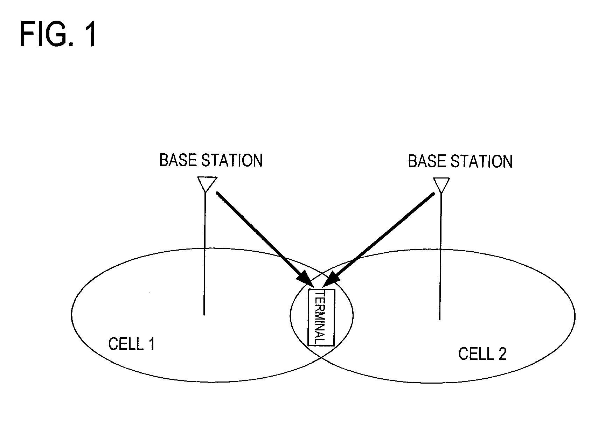

FIG. 1 is a diagram illustrating a case of simultaneous multicast data transmission from a plurality of base stations. In EUTRAN, use of long CP sub-frames is assumed for such the multicast data transmission. However, there may be a case of using short CP sub-frames for the former cell-specific multicast data transmission also. Normally, as to the multicast data, no retransmission in the physical layer/MAC layer is made. Therefore, secure reception of the multicast data is required in a mobile communication terminal (hereafter referred to as "terminal") even located in the vicinity of a cell end. Accordingly, as shown in FIG. 1, when cell-common multicast data are to be transmitted from a plurality of base stations, it is assumed that the terminal side receives and combines identical multicast data being simultaneously transmitted from the plurality of base stations, under the condition that transmission synchronization between the base stations is made to a certain extent.

The signals simultaneously transmitted from the plurality of base stations are received at the reception side with different reception timing. Here, the CP length is set in such a manner that the reception timing difference becomes shorter than the CP length of the OFDM signal in the long CP sub-frame. As a result, at the terminal side, the identical multicast data simultaneously transmitted from the plurality of base stations can be processed as if the data were transmitted from a single base station. Further, on the terminal side, by combining the signals received from the plurality of base stations, the reception signal power becomes large, making it possible to receive the multicast data even at the terminal which exists in the vicinity of the cell end. To securely perform such the transmission, OFDM signals having long CP are used for multicast data transmission.

In the downlink, short CP sub-frames for unicast data transmission and long CP sub-frames for multicast data transmission are basically time-division multiplexed on an identical carrier. The time division multiplexing is made so that each long CP sub-flame or each consecutive long CP sub-frames are inserted in between consecutive short CP sub-frames.

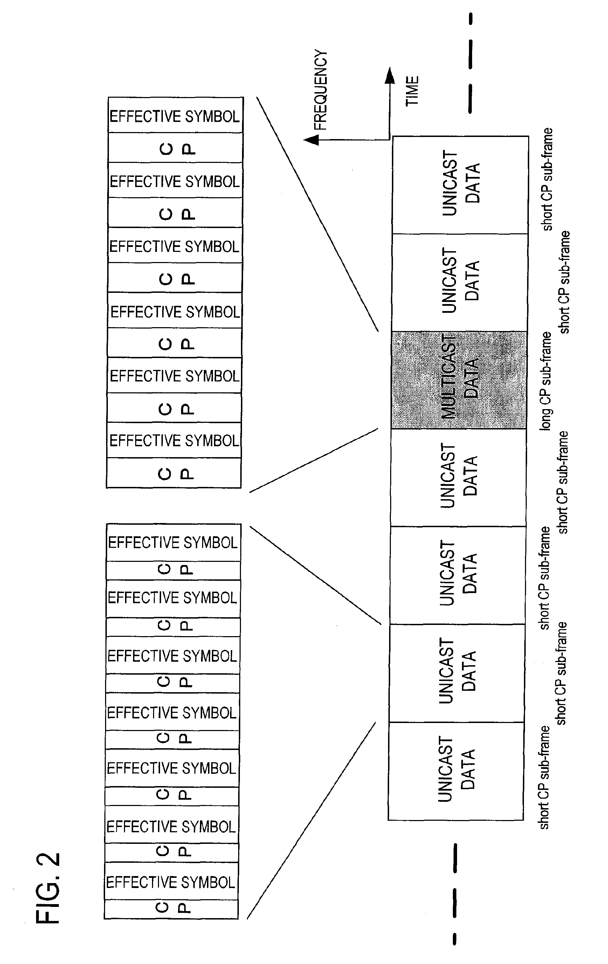

FIG. 2 is a diagram illustrating a state that a long CP sub-frame is inserted in a time-division multiplexed manner between short CP sub-frames consecutively transmitted on an identical carrier. The frequency and timing to insert the long CP sub-frame are either fixed or varied flexibly. The OFDM symbols in the short CP sub-frame and the long CP sub-frame have different CP lengths, but the same length with regard to the effective OFDM symbol portions. Accordingly, the OFDM signals transmitted in the long CP sub-frame and the short CP sub-frame can be processed at the terminal side using an identical FFT circuit. However, in order to remove CP from the received OFDM signal symbol, the knowledge of the CP length in advance is necessary. In order that the entire terminals in the cell know the timing when multicast data are transmitted using long CP sub-frames, (1) in case that the transmission timing of each long CP sub-frame is fixed, for example, the base station notifies the terminal at the time point when the terminal accesses the base station for the first time. Alternatively, (2) in case that the transmission timing of the long CP sub-frame is varied flexibly, it is considered that the base station notifies the entire terminals located in the cell at several frames (or several tens of frames) before the transmission timing of each long CP sub-frame. Based on the notified timing information, the terminal on the reception side can properly remove each CP in the OFDM signal symbol transmitted in the long CP sub-frame, at the timing of the long CP sub-frame transmission.

Each individual user data is transmitted in the short CP sub-frame, and an ACK/NACK signal corresponding thereto is transmitted on the uplink at the timing shifted for a certain time from the transmission timing of the short CP sub-frame concerned. However, when the short CP sub-frame and the long CP sub-frame are time-division multiplexed on an identical carrier of the downlink, each individual user data is not transmitted in an interval in which the long CP sub-frame for multicast data is being transmitted. Therefore, it is unnecessary to transmit the ACK/NACK signal on the uplink.

In EUTRAN, data transmission based on frequency/time domain scheduling is performed on both the downlink and the uplink. Data transmission on the uplink is performed by use of a radio resource allocated by the base station. Specifically, the entire transmission bands in the downlink and the uplink are divided into sub-bands at equal intervals. In case of the data transmission on the uplink, it is specified by the base station to each terminal which sub-band is to be used to transmit data from the terminal to the base station. The above designation of the sub-band is referred to as radio resource allocation (or uplink scheduling).

The above radio resource allocation information is notified from the base station to the terminal on the downlink, and the above information is transmitted using a short CP sub-frame. The radio resource allocation in regard to the uplink is performed on each sub-frame basis. A certain terminal may transmit data using consecutive sub-frames, or may transmit data using inconsecutive sub-frames. Even in case the data transmission is performed on the consecutive sub-frames, the sub-band may be changed on the basis of each sub-frame. Also, a plurality of sub-bands may be allocated to a certain sub-frame, and data transmission may be performed on the uplink, using the allocated plurality of sub-bands. This is based on the consideration of variation on the radio channel quality in either the time axis or the frequency axis, as well as a data amount desired for transmission from each terminal in the cell to the base station, and a produced delay condition of the data transmission. Planning the radio resource allocation in consideration thereof is carried out at the base station, and the radio resource allocation information based on the above result is transmitted to each terminal on the downlink.

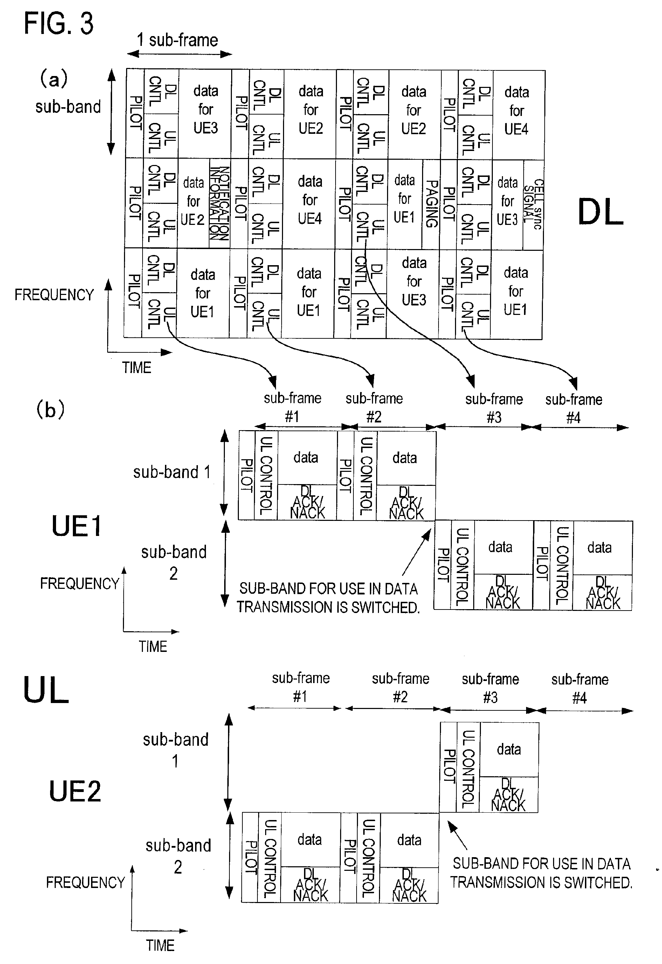

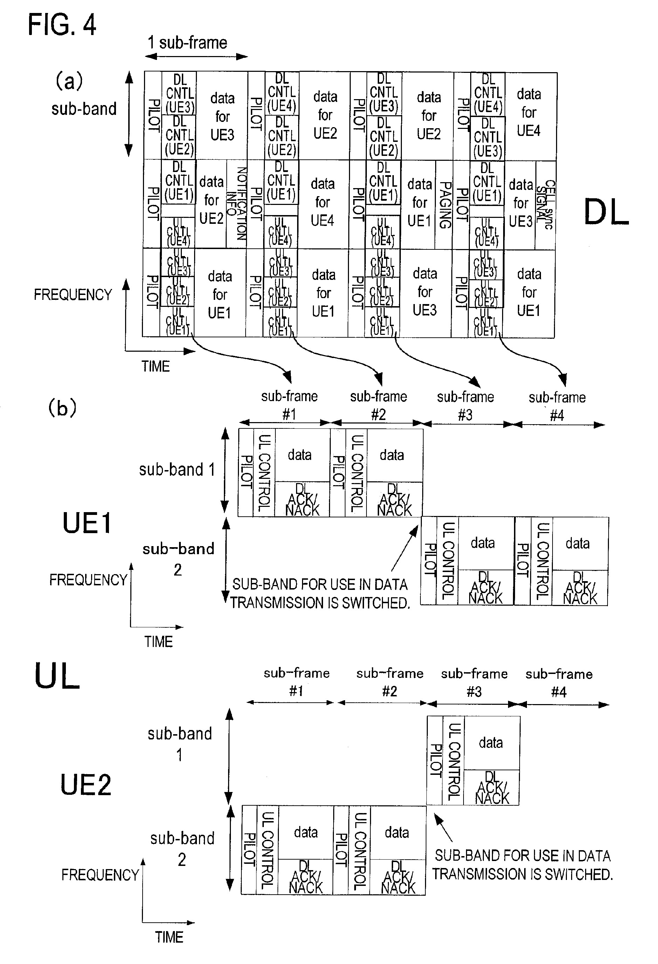

FIGS. 3 and 4 are diagrams illustrating a first example and a second example of radio frame formats for the downlink and the uplink, respectively, in case that only the short CP sub-frames are transmitted. FIGS. 3, 4 merely exemplify the signal categories to be transmitted. Although the allocation in each sub-band of each sub-frame is not specifically shown, it is assumed here that transmission is made on the downlink in the order of pilot signal, control signal accompanying data (information necessary for demodulating and decoding data, such as data retransmission state information), and data. In the first example of the downlink radio frame format shown in FIG. 3(a), in one sub-band region of one sub-frame, there are transmitted a data destined to a certain terminal, a DL control signal (control signal accompanying the data concerned) and a UL control signal (uplink radio resource allocation information for use in data transmission on the uplink from the terminal concerned). Meanwhile, in the second example of the downlink radio frame format shown in FIG. 4(a), there is shown a case that a data destined to a certain terminal and a control signal accompanying the data concerned are not transmitted in an identical sub-band. In this case, the control signal includes position information indicating on which sub-band the data related to the above control signal is to be transmitted.

FIGS. 3(a) and 4(a) are examples of downlink radio frame formats, and FIGS. 3(b) and 4(b) are examples of uplink radio frame formats from a terminal. In the drawings, a terminal may also be described as UE (User Equipment).

In FIGS. 3 (a) and 4(a), the terminal receives the pilot signals and the entire control signals transmitted in the entire transmission bands, and examines whether the control signals include information destined to the self-terminal. If there is information to the self (information related to the downlink data destined to the self-terminal to be transmitted successively, and radio resource information necessary for transmitting on the uplink), according to the above information, the terminal receives the data on the downlink destined to the self. The terminal then transmits an ACK/NACK signal on the uplink, as shown in FIGS. 3(b) and 4(b). The sub-band for transmitting the ACK/NACK signal on the uplink is specified by a UL control signal. Different sub-bands may be specified for each sub-frame.

Both FIG. 3 and FIG. 4 show examples such that the number of sub-bands in the downlink and the uplink is limited to 2-3. However, in a practical system, the entire transmission bands are divided into 20 sub-bands or more. Also, as to the uplink, there are shown in the figures that a certain terminal transmits data using one sub-band per sub-frame. However, it is possible to transmit on a plurality of sub-bands in one sub-frame, or a varied number of sub-bands to be used for each sub-frame.

In the patent document 1 shown below, there is disclosed an invention having a feature in a signal transmitted on the uplink from user equipment (UE) to a radio network (UTRAN). Specifically, by forming a random access message (RAM) transmitted on the uplink to include information which represents functional capability of the user equipment (UE_CAPABILITY), the radio network can know the capability of the user equipment. With this, a function performed by the radio network can be optimized to fit the user equipment capability.
[Non-patent document 1] 3GPP TR25.814 V1.4.0
[Patent document 1] The official gazette of the Japanese Unexamined Patent Publication No. 2002-539694.

### DISCLOSURE OF THE INVENTION

### PROBLEMS TO BE SOLVED BY THE INVENTION

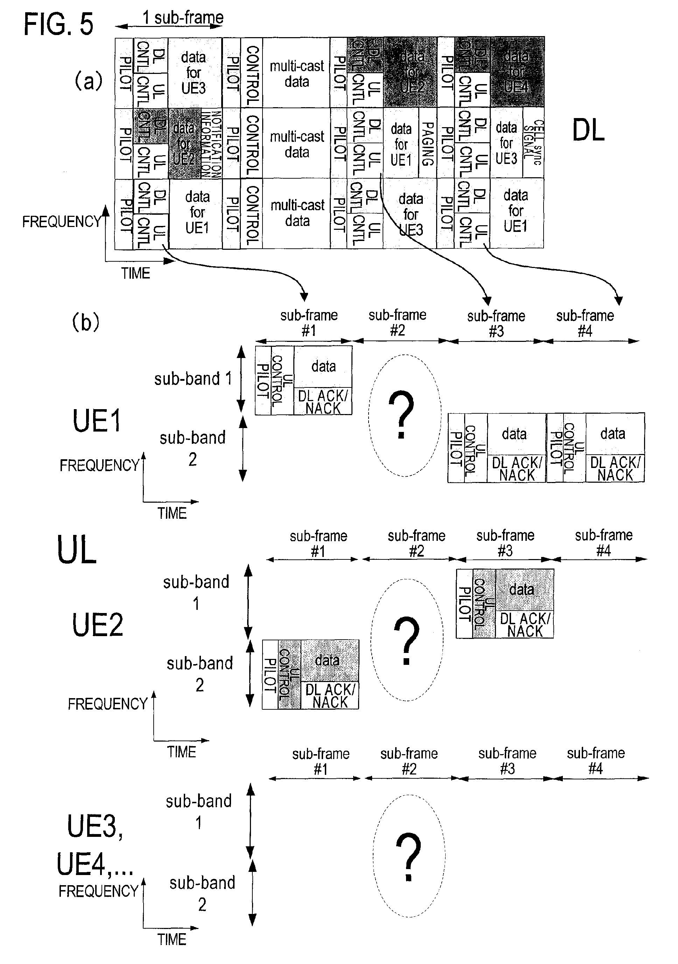

FIG. 5 is a diagram illustrating an exemplary radio frame format on the downlink and the uplink when a long CP sub-frame is inserted in between short CP sub-frames on the downlink. FIG. 5 (a) is an example of a downlink radio frame format, and FIG. 5 (b) is an example of an uplink radio frame format from terminals (UE1, UE2, UE3 and UE4).

On the downlink shown in FIG. 5 (a), in a time interval in which multicast data is transmitted, a UL control signal (UL radio resource allocation information) is not transmitted on the downlink. Therefore, in an uplink time interval corresponding to the time interval in which multicast data is transmitted on the downlink (i.e. a time interval time-shifted from the time interval in which multicast data is transmitted, namely the time interval of a sub-frame #2 in FIG. 5(b)), no terminal can transmit data according to an instruction from the base station. As such, if data transmission is not performed in the uplink time interval, the radio resource in the uplink time interval concerned is wasted and not preferable.

Accordingly, the objective of the present invention is to provide a radio communication system and a communication method, capable of effectively utilizing an uplink time interval corresponding to a time interval in which multicast data is transmitted on the downlink.

### MEANS TO SOLVE THE PROBLEMS

As a first configuration of the radio communication system according to the present invention to achieve the aforementioned objective, the radio communication system includes: a radio base station transmitting time-division-multiplexed data signals including unicast data and multicast data on an identical carrier wave, and before transmitting the multicast data, transmitting an information signal notifying of the timing to transmit the multicast data; and a mobile communication terminal receiving the data signal and the information signal from the radio base station, deciding a first uplink time interval, an uplink time interval corresponding to a time interval in which the multicast data is transmitted on a downlink, based on the information signal, and transmitting a predetermined signal in the first uplink time interval either autonomously or according to an instruction from the radio base station.

As a second configuration of the radio communication system according to the present invention, in the above-mentioned first configuration, the mobile communication terminal autonomously transmits a random access signal based on a random access method in the first uplink time interval.

As a third configuration of the radio communication system according to the present invention, in the above-mentioned first configuration, the radio base station transmits to the mobile communication terminal a signal instructing to transmit a measurement result of downlink radio channel quality. Further, on receiving the signal, the mobile communication terminal measures downlink radio channel quality, and transmits a signal notifying of the measurement result in the first uplink time interval.

As a fourth configuration of the radio communication system according to the present invention, in the above-mentioned first configuration, the radio base station transmits to the mobile communication terminal a signal instructing to transmit a pilot signal for measuring uplink radio channel quality. Further, on receiving the signal, the mobile communication terminal transmits the pilot signal for measuring uplink radio channel quality in the first uplink time interval.

As a fifth configuration of the radio communication system according to the present invention, in the above-mentioned first configuration, the radio base station transmits to the mobile communication terminal a signal instructing to transmit a measurement result of downlink radio channel quality and a signal instructing to transmit a pilot signal for measuring uplink radio channel quality. Further, on receiving the signals, the mobile communication terminal measures downlink radio channel quality, and transmits a signal notifying of the measurement result and the pilot signal for measuring uplink radio channel quality in the first uplink time interval.

As a sixth configuration of the radio communication system according to the present invention, in the above-mentioned first configuration, when the mobile communication terminal transmits a data signal in an uplink time interval immediately before the first uplink time interval, the mobile communication terminal autonomously transmits a data signal in the first uplink time interval also.

Further, the present invention provides the mobile communication terminal and the radio base station constituting the radio communication system according to the present invention described above.

### EFFECT OF THE INVENTION

According to the present invention, because a predetermined signal is transmitted from a mobile communication terminal to a radio base station in an uplink time interval corresponding to a time interval in which multicast data is transmitted on the downlink, the uplink time interval concerned can be utilized effectively.

### BRIEF DESCRIPTION OF THE DRAWINGS

FIG. 1 is a diagram illustrating a case of simultaneous multicast data transmission from a plurality of base stations.
FIG. 2 is a diagram illustrating a state that a long CP sub-frame is inserted in a time-division multiplexed manner between short CP sub-frames consecutively transmitted on an identical carrier.
FIG. 3 is a diagram illustrating a first example of a radio frame format on the downlink and the uplink when only a short CP sub-frame is transmitted.
FIG. 4 is a diagram illustrating a second example of a radio frame format on the downlink and the uplink when only a short CP sub-frame is transmitted.
FIG. 5 is a diagram illustrating an exemplary radio frame format on the downlink and the uplink when a long CP sub-frame is inserted in between short CP sub-frames on the downlink.
FIG. 6 is a diagram illustrating a first example of a signal transmitted from a terminal in the uplink time interval corresponding to the time interval in which multicast data is transmitted on the downlink.
FIG. 7A shows a terminal configuration in the first structural example of the radio communication system according to the present invention.
FIG. 7B shows a base station configuration in the first structural example of the radio communication system according to the present invention.
FIG. 8 is a diagram illustrating a second example of a signal transmitted by a terminal in an uplink time interval corresponding to a time interval in which multicast data is transmitted on the downlink.
FIG. 9A shows a terminal configuration of the second structural example of the radio communication system according to the present invention.
FIG. 9B shows a base station configuration of the second structural example of the radio communication system according to the present invention.
FIG. 10 is a diagram illustrating a third example of a signal transmitted by a terminal in an uplink time interval corresponding to a time interval in which multicast data is transmitted on the downlink.
FIG. 11A shows a terminal configuration of the third structural example of the radio communication system according to the present invention.
FIG. 11B shows a base station configuration of the third structural example of the radio communication system according to the present invention.
FIG. 12A shows a configuration for generating a single carrier on the uplink.
FIG. 12B shows a configuration for generating a single carrier on the uplink.
FIG. 13 is a diagram illustrating a fourth example of a signal transmitted by a terminal in an uplink time interval corresponding to a time interval in which multicast data is transmitted on the downlink.
FIG. 14A shows a terminal configuration of the fourth structural example of the radio communication system according to the present invention.
FIG. 14B shows a base station configuration of the fourth structural example of the radio communication system according to the present invention.
FIG. 15 is a diagram illustrating a fifth example of a signal transmitted by a terminal in an uplink time interval corresponding to a time interval in which multicast data is transmitted on the downlink.
FIG. 16A shows a terminal configuration of the fifth structural example of the radio communication system according to the present invention.
FIG. 16B shows a base station configuration of the fifth structural example of the radio communication system according to the present invention.

### PREFERED EMBODIMENTS OF THE INVENTION

Embodiments of the present invention will now be described with reference to the drawings. The technical scope of the present invention, however, shall not be limited to these embodiments, but extend to matters stated in the Claims and equivalents thereof.

In the embodiments of the present invention, each of the terminal equipment UE transmits data on the uplink either autonomously or according to an instruction from a base station, in an uplink time interval (time interval being shifted for a predetermined time from a time interval in which multicast data is transmitted) corresponding to a time interval in which multicast data is transmitted on the downlink. Hereafter, an exemplary signal transmitted from each terminal in the uplink time interval corresponding to the time interval in which multicast data is transmitted on the downlink will be explained.

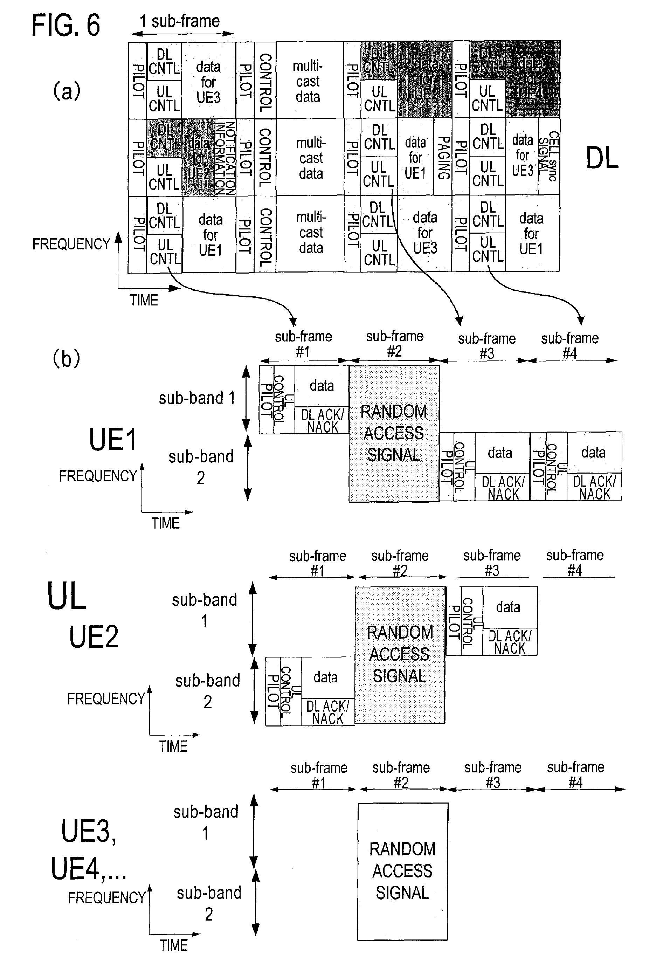

FIG. 6 is a diagram illustrating a first example of a signal transmitted from a terminal in the uplink time interval corresponding to the time interval in which multicast data is transmitted on the downlink. In the first example, the terminal transmits a random access signal based on a random access method such as Slotted ALOHA in the uplink time interval (sub-frame #2 shown in FIG. 6) corresponding to the time interval in which multicast data is transmitted on the downlink.

A general random access method is a method that a plurality of terminals simultaneously use one radio channel for trying to transmit signals, as in the case of , for example, call origination from a terminal. The signal transmitted using the radio channel is called random access signal.

In FIG. 6(a), similar to FIG. 5(a), there is shown a downlink radio frame format when a long CP sub-frame is inserted in between short CP sub-frames on the downlink. Also, in FIG. 6(b), examples of uplink radio frame formats from the terminals UE1 and UE2 are shown. Other terminals also transmit data using similar formats.

As shown in FIG. 6(a), UL control signal (UL radio resource allocation information) is not transmitted on the downlink in the time interval in which multicast data is transmitted on the downlink. Therefore, because there is no allocation of UL radio resource, data transmission cannot be performed in the uplink time interval (time interval shifted for a certain time from the time interval in which multicast data is transmitted, namely the interval of sub-frame #2 in FIG. 6(b)) corresponding to the time interval in which multicast data is transmitted on the downlink.

Therefore, in the embodiment according to the present invention, the terminal is made possible to transmit a random access signal based on the random access method in an arbitrary sub-band in the above uplink time interval. The contents to be transmitted by the data transmission based on the above random access method include a preamble signal aimed at synchronization on the uplink or adjustment for synchronization, and a signal for requesting radio resource allocation on the uplink. It may also be possible that the random access signals to be transmitted from each terminal are transmitted by use of a plurality of sub-bands.

In order to enable the entire terminals to know in advance the timing when the multicast data are to be transmitted, (1) in an exemplary case that the transmission timing of a long CP sub-frame is fixed, for example, the base station may inform a terminal at a time point when the terminal first accesses the base station, or (2) in the case that the transmission timing of a long CP sub-frame is varied flexibly, for example, the base station may inform the entire terminals in the cell at several frames (or several tens of frames) before the long CP sub-frame transmission timing, using a common control signal etc. Hereafter, the control signal notifying of the timing when the multicast data are to be transmitted may be called as "multicast transmission timing information".

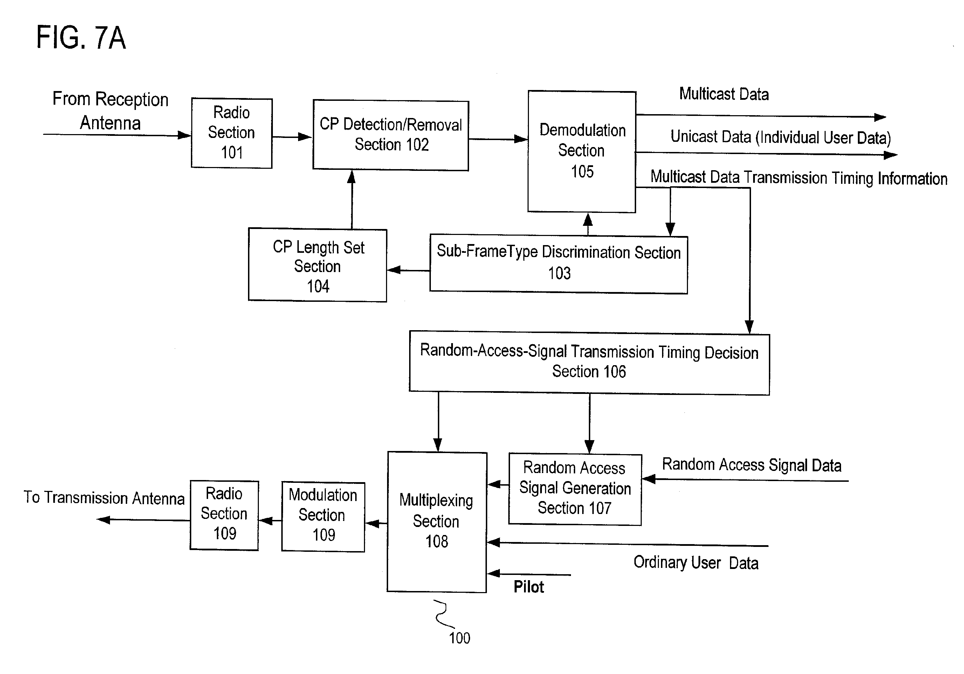

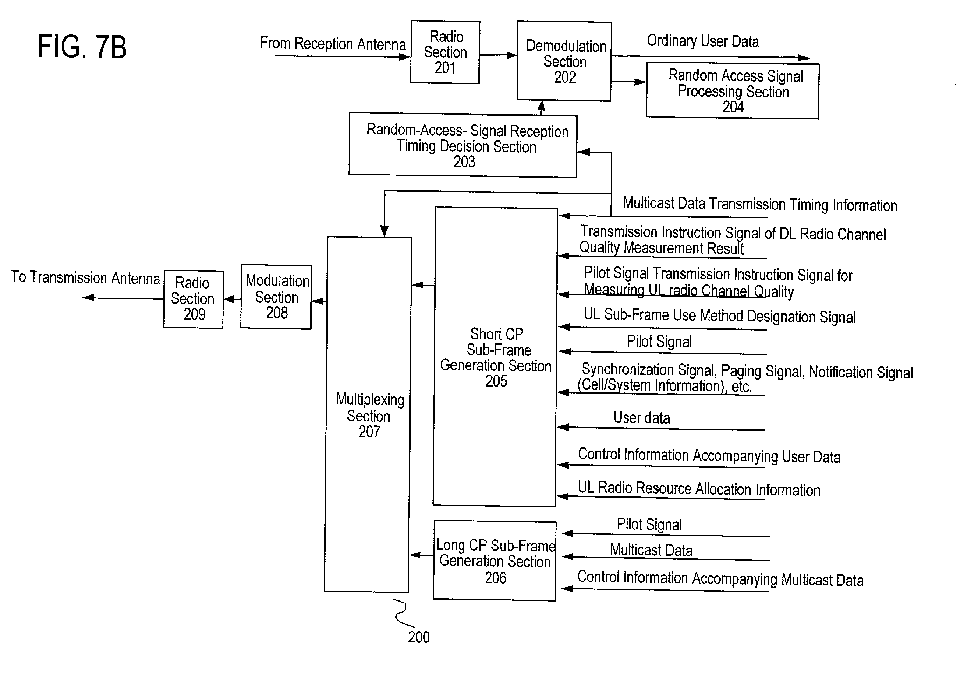

FIGS. 7A and 7B are diagrams illustrating a first exemplary configuration of a radio communication system according to an embodiment of the present invention. There is shown an exemplary configuration for transmitting/receiving a random access signal in an uplink time interval corresponding to a time interval in which multicast data is transmitted on the downlink. FIG. 7A shows a terminal configuration, and FIG. 7B shows a base station configuration.

In FIG. 7A, when a radio section 101 of a terminal 100 receives a signal, a CP detection/removal section 102 detects and removes CP on the basis of each sub-frame of the signal. A sub-frame type discrimination section 103 discriminates the timing for receiving a long CP sub-frame from a control signal (multicast data transmission timing information) included in a sub-frame which is received before receiving a long CP sub-frame, so as to notify a CP length set section 104 of the above timing. Based on the above information, CP length set section 104 sets a CP length, and then CP detection/removal section 102 removes the CP corresponding to the set CP length.

A demodulation section 105 demodulates after separating the sub-frame in which CP has been removed into a plurality of subcarriers with Fourier Transform (FFT), and outputs a data signal of either unicast data or multicast data and a control signal including multicast data transmission timing information etc.

A random-access-signal transmission timing decision section 106 acquires multicast data transmission timing information, and on the basis thereof, controls a random access signal generation section 107 and a multiplexing section 108.

Random access signal generation section 107 generates a random access signal according to an instruction from random-access-signal transmission timing decision section 106. Also, multiplexing section 108 multiplexes random access channel, ordinary user data, pilot signal, etc. in time division. At this time, according to the instruction from random-access-signal transmission timing decision section 106, multiplexing section 108 performs time division multiplexing so that the random access signal is transmitted in the uplink time interval corresponding to the time interval in which multicast data is transmitted on the downlink. A radio section 110 performs frequency conversion and power amplification upon a serial signal being output from a modulation section 109, so as to transmit from a transmission antenna.

In FIG. 7B, when a radio section 201 in a base station 200 receives a signal, a demodulation section 202 performs demodulation processing on the received signal. Based on the multicast data transmission timing information, a random-access-signal reception timing decision section 203 grasps the reception timing of the random access signal, and extracts a random access signal from the demodulated signal. The random access signal is processed in a random access signal processing section 204.

A short CP sub-frame generation section 205 generates a short CP sub-frame including a variety of input signals shown in FIG. 7B. As described earlier, usually, the short CP sub-frame is used when a user data, a unicast data, is to be transmitted.

A long CP sub-frame generation section 206 generates a long CP sub-frame including a variety of input signals shown in FIG. 7B. As described earlier, usually, the long CP sub-frame is used when a multicast data is to be transmitted.

Based on the multicast transmission timing information, a multiplexing section 207 multiplexes the short CP sub-frame with the long CP sub-frame in time division so that the long CP sub-frame is multiplexed at the timing of multicast data transmission on the downlink.

A modulation section 208 performs modulation of the multiplexed signal, separation into a plurality of subcarriers, inverse Fourier Transform (IFFT), and parallel-to-serial conversion. A radio section 209 performs frequency conversion, power amplification, etc. on the serial signal being output from modulation section 208, so as to transmit from a transmission antenna.

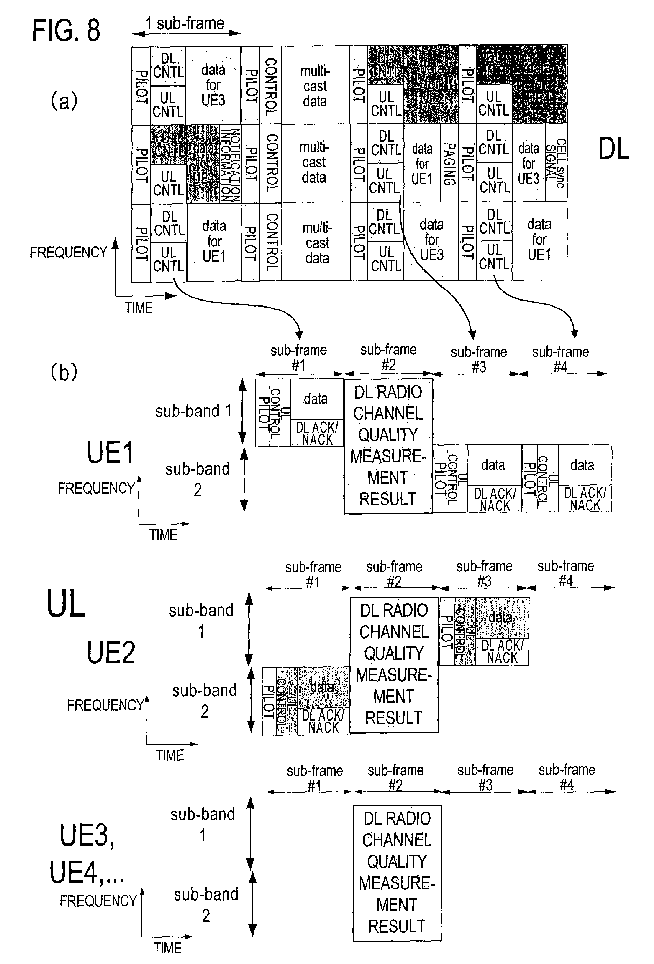

FIG. 8 is a diagram illustrating a second example of a signal transmitted by a terminal in an uplink time interval corresponding to a time interval in which multicast data is transmitted on the downlink. In the second example, the terminal transmits a signal notifying of the measurement result of downlink radio channel quality, in the uplink time interval corresponding to the time interval in which multicast data is transmitted on the downlink.

In FIG. 8(a), similar to FIG. 5(a), there is shown a downlink radio frame format when a long CP sub-frame is inserted in between short CP sub-frames on the downlink. Also, in FIG. 8(b), examples of uplink radio frame formats from the terminals UE1, UE2 are shown. Other terminals also transmit data using similar formats.

As shown in FIG. 8(a), on the downlink, UL control signal (UL radio resource allocation information) is not transmitted on the downlink in a time interval in which multicast data is transmitted. Accordingly, because no UL radio resource is allocated to any terminal, each terminal cannot transmit data in the uplink time interval (time interval shifted for a certain time from the time interval in which multicast data is transmitted, namely the interval of sub-frame #2 in FIG. 8(b)) corresponding to the time interval in which multicast data is transmitted on the downlink.

Therefore, in the embodiment according to the present invention, the terminal is made possible to transmit a signal notifying of the measurement result of the radio channel quality on the downlink (a measurement result signal of DL radio channel quality) on the above uplink time interval.

Different from the case of the aforementioned first example, in case of the second example, it is necessary to notify of a terminal (or terminals as a case may be) which may transmit on the uplink time interval concerned beforehand. Accordingly, when the multicast data is to be transmitted on the downlink in the long CP sub-frame, ID information,indicatingtheterminal(s)which maytransmit on the uplink time interval concerned, sub-band information to be allocated, etc. are transmitted on the downlink either immediately before or several mS to several tens of ms before the multicast data transmission.

It is possible to assign one terminal to one sub-band, and it is also possible for a plurality of terminals specified in advance to simultaneously transmit measurement result signals of DL radio channel quality in an identical sub-band. In this case, in order that the signal transmitted from each terminal does not collide, the transmission signal of each terminal is frequency multiplexed (or time-division multiplexed or code multiplexed) according to a rule specified in advance. In the uplink of EUTRAN, use of a single carrier having a comb-tooth-shaped spectrum is also assumed. In this case, it is also possible to multiplex transmission signals from among the terminals in the identical sub-band, by using a transmission mode in which frequencies are shifted so that the comb-tooth-shaped spectra are not overlapped among the terminals.

The reason for notifying the base station of the measurement result downlink radio channel quality on the uplink is that when transmitting data to each terminal, the base station requires the radio channel quality information of each sub-band (or each sub-band group constituted of a plurality of sub-bands) to decide which sub-band in the downlink transmission band is to be used.

The measurement result of downlink radio channel quality can be transmitted simultaneously, when the base station transmits a data to a certain terminal on the downlink and the terminal transmits an ACK/NACK signal corresponding thereto to the base station on the uplink. However, using the above method only, when the data transmission on the downlink is not continuous, the transmission of the downlink radio channel quality measurement result also becomes discontinuous. When the data transmission to a certain terminal on the downlink becomes discontinuous and the non-transmission time becomes long, the non-transmission time of the measurement result of downlink radio channel quality also becomes long. As the non-transmission time becomes longer, the effectiveness of the downlink radio channel quality information grasped by the base station becomes reduced. Also, there is reduced reliability in the downlink radio channel quality information to which the base station refers when the state changes from a non-transmission state of the downlink data to a transmission state again.

Therefore, when the non-transmission time of the data on the downlink becomes long, it is beneficial to transmit only the measurement result of downlink radio channel quality from the terminal to the base station, in view of improving the data transmission characteristic at the time of restarting the data transmission on the downlink. Depending on the signal size of the DL radio channel quality measurement result, it is effective that the plurality of terminals use an identical sub-band in a shared manner (i.e. multiplexes the measurement result signal of DL radio channel quality in an identical sub-band).

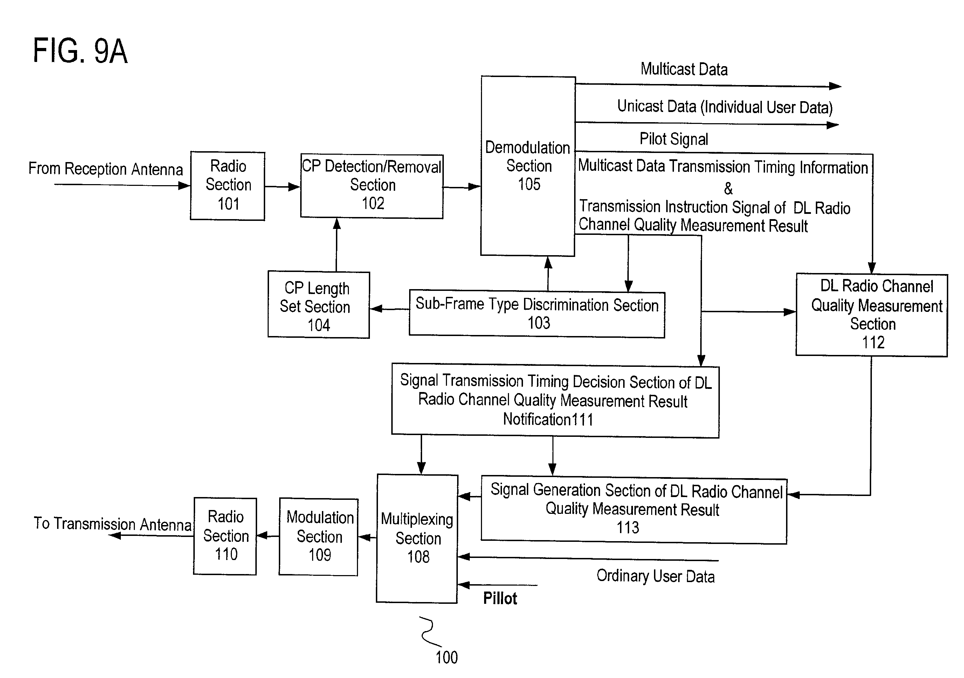

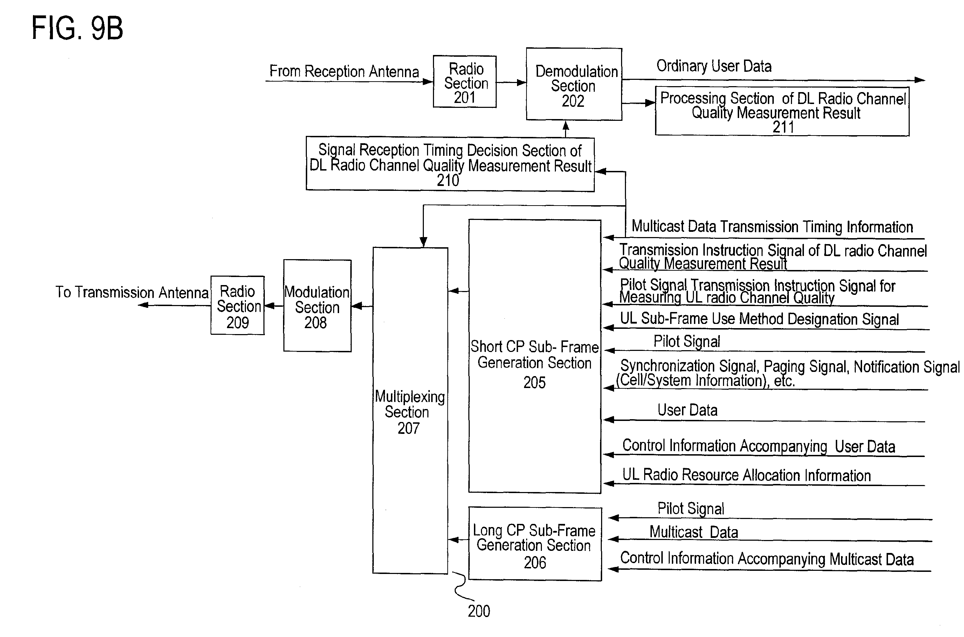

FIGS. 9A, 9B are diagrams illustrating a second exemplary configuration of the radio communication system according to the embodiment of the present invention. There is shown an exemplary configuration for transmitting/receiving a measurement result signal of DL radio channel quality in an uplink time interval corresponding to a time interval in which multicast data is transmitted on the downlink. FIG. 9A shows a terminal configuration, and FIG. 9B shows a base station configuration. In FIGS. 9A and 9B, identical reference symbols are attached to the configuration elements identical or similar to the elements shown in FIGS. 7A, 7B.

The terminal configuration shown in FIG. 9A is a configuration similar to the configuration shown in FIG. 7A, and different points from FIG. 7A will be explained.

A signal transmission timing decision section 111 of DL radio channel quality measurement result acquires multicast data transmission timing information being output from demodulation section 105 and a transmission instruction signal of DL radio channel quality measurement result.

Further, based on the transmission instruction signal of DL radio channel quality measurement result, a DL radio channel quality measurement section 112 measures downlink radio channel quality, and transmits the above measured result to a signal generation section 113 of DL radio channel quality measurement result. Signal generation section 113 of DL radio channel quality measurement result generates the measurement result signal of DL radio channel quality, according to an instruction from signal generation section 113 of DL radio channel quality measurement result.

Further, based on the multicast data transmission timing information, signal transmission timing decision section 111 of DL radio channel quality measurement result decides the transmission timing of the measurement result signal of DL radio channel quality, and controls time division multiplexing of the measurement result signal of DL radio channel quality performed by multiplexing section 108. According to the instruction by signal transmission timing decision section 111 of DL radio channel quality measurement result, multiplexing section 108 performs time division multiplexing so that the measurement result signal of DL radio channel quality is transmitted in the uplink time interval corresponding to the time interval in which multicast data is transmitted on the downlink.

The terminal configuration shown in FIG. 9B is a configuration similar to the configuration shown in FIG. 7B, and different points from FIG. 7B will be explained.

Based on the multicast data transmission timing information, a signal reception timing decision section 210 of DL radio channel quality measurement result grasps the reception timing of the measurement result signal of DL radio channel quality, and extracts the measurement result signal of DL radio channel quality from the demodulated signal. The measurement result signal of DL radio channel quality is processed in a signal processing section 211 of DL radio channel quality measurement result.

Also, as shown in FIG. 9B, a transmission instruction signal of DL radio channel quality measurement result is transmitted using a short CP sub-frame.

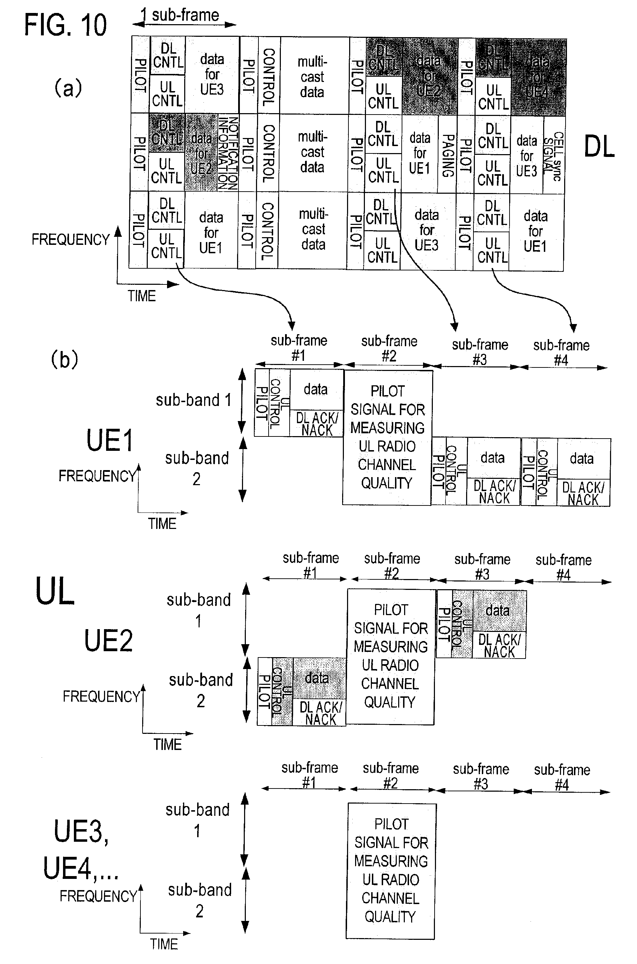

FIG. 10 is a diagram illustrating a third example of a signal transmitted by a terminal in an uplink time interval corresponding to a time interval in which multicast data is transmitted on the downlink. In the third example, the terminal transmits a pilot signal to be used for measuring radio channel quality of the uplink, in the uplink time interval corresponding to the time interval in which multicast data is transmitted on the downlink.

In FIG. 10(a), similar to FIG. 5(a), there is shown a downlink radio frame format when a long CP sub-frame is inserted in between short CP sub-frames on the downlink. Also, in FIG. 10(b), examples of uplink radio frame formats from the terminals UE1, UE2 are shown. Other terminals also transmit data using similar formats.

As shown in FIG. 10(a), on the downlink, a UL control signal (UL radio resource allocation information) is not transmitted on the downlink in a time interval in which multicast data is transmitted. Accordingly, because no UL radio resource is allocated to any terminal, each terminal cannot transmit data in the uplink time interval (time interval shifted for a certain time from the time interval in which multicast data is transmitted, namely the interval of sub-frame #2 in FIG. 10(b)) corresponding to the time interval in which multicast data is transmitted on the downlink.

Therefore, in the embodiment according to the present invention, the terminal is made possible to transmit a pilot signal to be used for measuring uplink radio channel quality (a pilot signal for measuring UL radio channel quality) in the above uplink time interval.

In case of the third example, similar to the case of the aforementioned second example, it is necessary to notify in advance of a terminal (or terminals as a case may be) which may transmit on the uplink time interval concerned. Accordingly, when the multicast data is to be transmitted on the downlink in the long CP sub-frame, ID information indicating the terminal (s) which may transmit on the uplink time interval concerned, sub-band information to be allocated, etc. are transmitted on the downlink, either immediately before or several mS to several tens of ms before the multicast data transmission.

It is possible to assign one terminal to one sub-band, and it is also possible for a plurality of terminals specified in advance to transmit pilot signals to be used for measuring the uplink radio channel quality simultaneously in an identical sub-band. In this case, in order to prevent the collision of signals transmitted from the terminals, the transmission signals from the terminals are frequency multiplexed (or time-division multiplexed or code multiplexed) according to a rule specified in advance. In the uplink of EUTRAN, it is also assumed to use a single carrier having a comb-tooth-shaped spectrum. In this case, it is also possible to multiplex the transmission signals among the terminals in the identical sub-band, using a transmission mode in which frequencies are shifted so as not to mutually overlap the comb-tooth-shaped spectra among the terminals.

The reason for transmitting the pilot signal to measure the uplink radio channel quality is that the base station requires the pilot signal so as to decide which sub-band in the uplink transmission band is to be used when the terminal transmits data on the uplink. Therefore, it is effective to transmit each pilot signal for measuring uplink radio channel quality to be transmitted from each terminal in such a manner as extending over a plurality of sub-bands. The method for transmitting the pilot signal for measuring uplink radio channel quality in a manner extending over the plurality of sub-bands will be described later.

The uplink radio channel quality measurement can also be performed using a pilot signal which is simultaneously transmitted when an ordinary data is transmitted. However, the pilot signal is not transmitted continuously in a state that the data transmission is performed discontinuously. In the state that the ordinary data transmission from a certain terminal becomes discontinuous, when the non-transmission data state is shifted to a restart state, the base station has to use uplink radio channel quality information having reduced reliability due to the lapse of time to decide the sub-band to be assigned to the terminal concerned. Therefore, when the non-transmission time becomes long at the terminal in which data transmission becomes discontinuous, it is beneficial to have the pilot signal transmitted to measure uplink radio channel quality, from the viewpoint of improving the data transmission characteristic at the time of resuming the data transmission on the uplink.

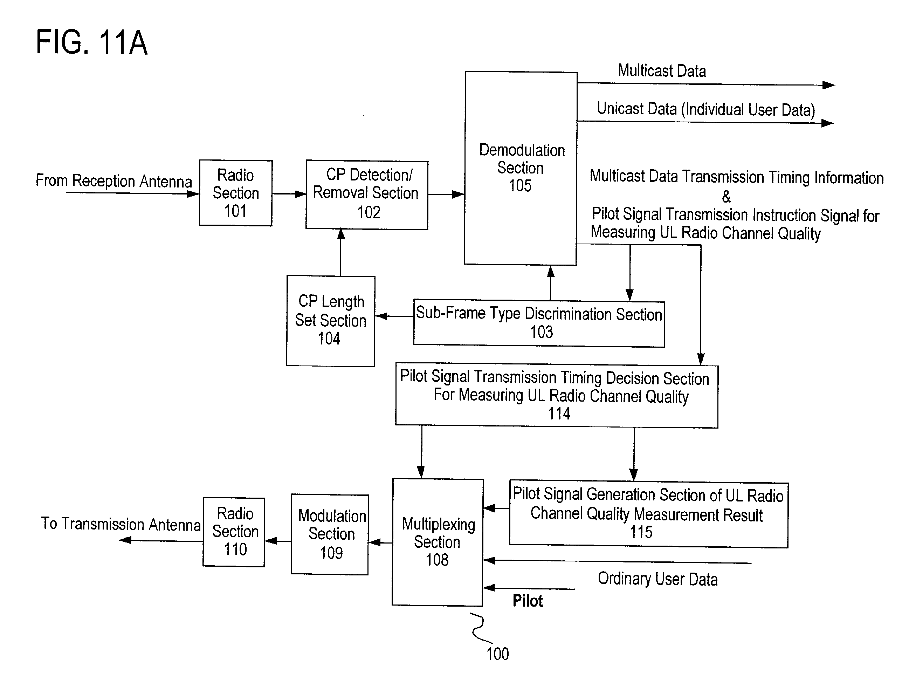

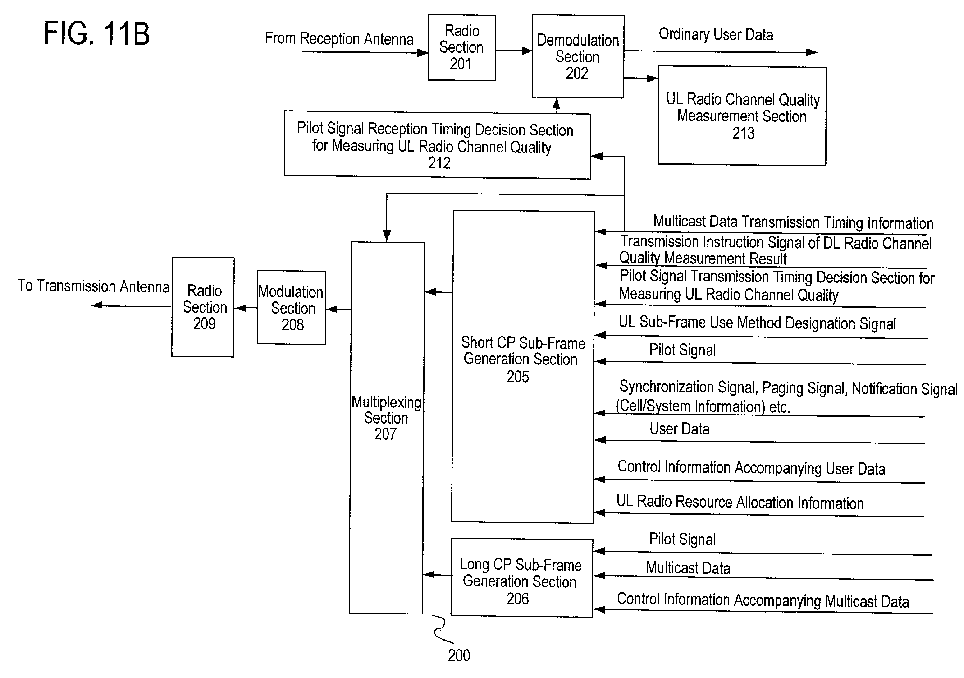

FIGS. 11A and 11B are diagrams illustrating a third exemplary configuration of the radio communication system according to the embodiment of the present invention. There is shown an exemplary configuration for transmitting/receiving a pilot signal for measuring UL radio channel quality in an uplink time interval corresponding to a time interval in which multicast data is transmitted on the downlink. FIG. 11A shows a terminal configuration, and FIG. 11B shows a base station configuration. In FIGS. 11A, 11B, identical reference symbols are attached to configuration elements identical or similar to the configuration elements shown in FIGS. 7A, 7B.

The terminal configuration shown in FIG. 11A is a configuration similar to the configuration shown in FIG. 7A, and different points from FIG. 7A will be explained.

A pilot signal transmission timing decision section 114 for measuring UL radio channel quality acquires multicast data transmission timing information and a pilot signal transmission instruction signal for measuring UL radio channel quality, being output from demodulation section 105.

According to the instruction from pilot signal transmission timing decision section 114 for measuring UL radio channel quality, a signal generation section 115 of UL radio channel quality measurement result generates the pilot signal for measuring UL radio channel quality.

Further, based on the multicast data transmission timing information, pilot signal transmission timing decision section 114 for measuring UL radio channel quality decides the transmission timing of the pilot signal for measuring UL radio channel quality, so as to control time division multiplexing of the pilot signal for measuring UL radio channel quality in multiplexing section 108. According to the instruction from pilot signal transmission timing decision section 114 for measuring UL radio channel quality, multiplexing section 108 performs time division multiplexing so that the pilot signal for measuring UL radio channel quality is transmitted in the uplink time interval corresponding to the time interval in which multicast data is transmitted on the downlink.

The configuration shown in FIG. 11B is a configuration similar to the configuration shown in FIG. 7B, and different points from FIG. 7B will be explained.

Based on the multicast data transmission timing information, a pilot signal reception timing decision section 212 for measuring UL radio channel quality grasps the reception timing of the pilot signal for measuring UL radio channel quality, and extracts the pilot signal for measuring UL radio channel quality from the demodulated signal. Based on the pilot signal for measuring UL radio channel quality, a UL radio channel quality measurement section 213 measures UL radio channel quality.

Also, as shown in FIG. 11B, the transmission instruction signal of the pilot signal for measuring UL radio channel quality is transmitted using a short CP sub-frame.

Hereafter, the method of transmitting the pilot signal for measuring uplink radio channel quality in a manner extending over a plurality of sub-bands will be explained.

When the above pilot signal is transmitted using one sub-band, the base station can only measure the channel quality of the sub-band concerned. It is assumed that the uplink uses a single carrier, and when generating the single carrier on the terminal side, the single carrier is generated so that the frequency band thereof becomes a discrete (comb-tooth-shaped) band extending over a plurality of sub-bands.

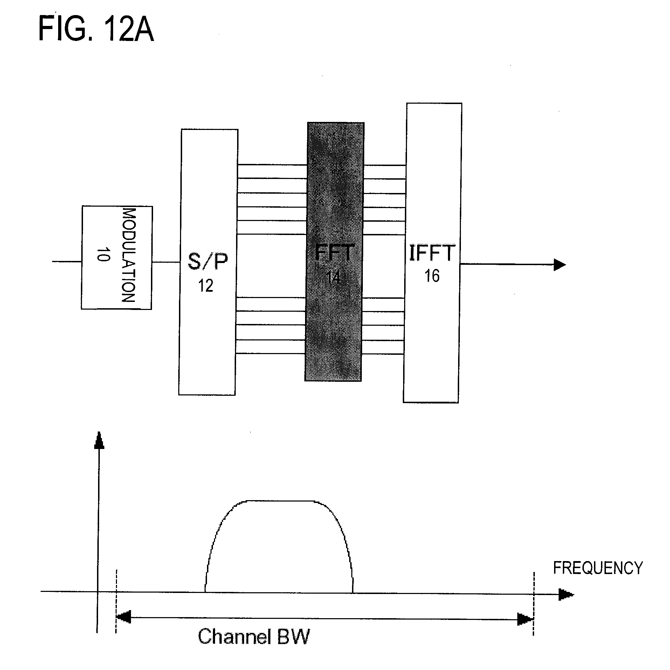

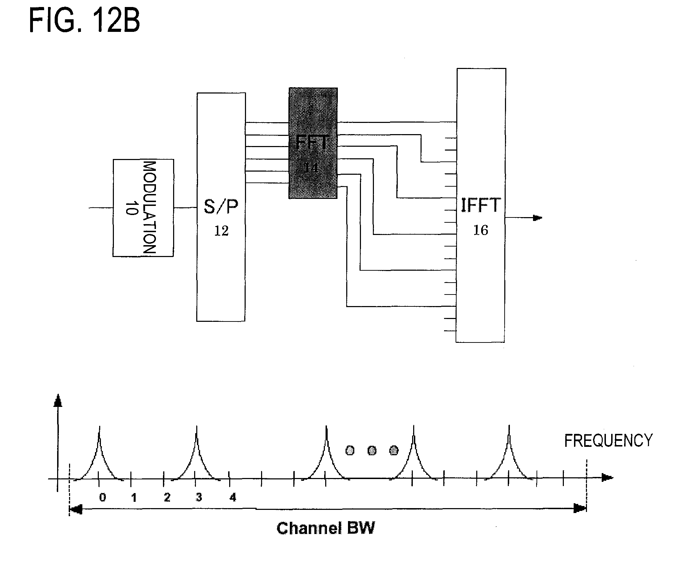

FIGS. 12A, 12B are diagrams illustrating the generation of a single carrier on the uplink. FIG. 12A shows a configuration for generating an ordinary single carrier using FFT and IFFT circuits, while FIG. 12B shows a configuration for generating a single carrier having a comb-tooth-shaped frequency band using FFT and IFFT circuits.

As shown in FIG. 12A, an ordinary single carrier may also be generated by converting a modulation signal modulated by a modulation section 10 into a parallel signal by means of a S/P (serial-to-parallel conversion section) 12, inputting the above parallel signal into a Fourier Transform section (FFT) 14, and further performing Inverse Fourier Transform of the Fourier-transformed signal by means of an Inverse Fourier Transform section (IFFT) 16. At this time, the signals output from an output port group of FFT 14 having continuous frequencies are input intact to an input port group of IFFT 16 of continuous frequencies. Thus, as shown in the figure, a single carrier having a frequency band of a certain width is generated.

Meanwhile, in FIG. 12B, the signals output from the output port group of FFT 14 having continuous frequencies are input to the input port group of IFFT 16 having discrete frequencies. As shown in the figure, the frequency band of the single carrier being output from IFFT 16 has discrete bands over the bandwidth wider than the frequency band of the ordinary single carrier, so as to generate the single carrier having comb-tooth-shaped bands over a wide bandwidth.

Accordingly, by generating the single carrier so that the comb-tooth- shaped band spreads over the entire sub-band range, and by transmitting the pilot signal on the single carrier having such the band, it becomes possible to measure radio channel quality over the entire sub-band range. Further, by generating the comb-tooth-shaped bands to spread over the entire plurality of sub-band ranges, and by transmitting the pilot signals with the single carriers having such the bands, it becomes possible to measure uplink radio channel quality over the entire plurality of sub-band ranges. As such, the use of the single carrier signal having a comb-tooth-shaped spectrum is also applicable to a case of transmitting the measurement result signal of DL radio channel quality in the second example. Further, it is also possible to apply to the case of a fourth example described later. Further, by performing frequency shift so that the comb-tooth-shaped spectrum is not overlapped among a plurality of terminals, it becomes possible to multiplex signals from a plurality of terminals in an identical sub-band.

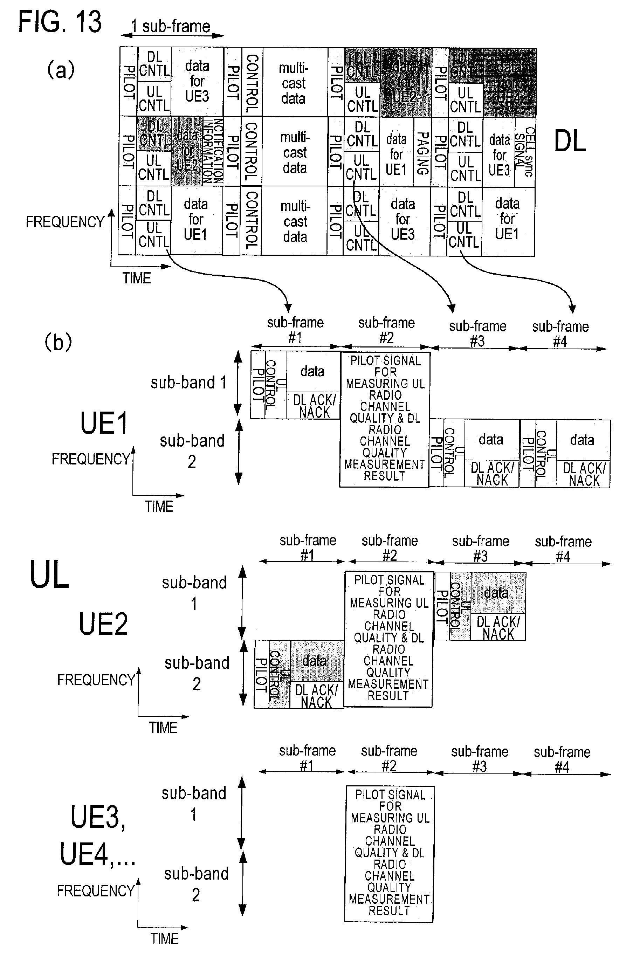

FIG. 13 is a diagram illustrating a fourth example of a signal transmitted by a terminal in an uplink time interval corresponding to a time interval in which multicast data is transmitted on the downlink. In the fourth example, in the uplink time interval corresponding to the time interval in which multicast data is transmitted on the downlink, the terminal transmits both a signal notifying of a measurement result of downlink radio channel quality (a measurement result signal of DL radio channel quality) and a pilot signal to be used for measuring uplink radio channel quality (a pilot signal for measuring UL radio channel quality). In short, the fourth example is a combination of the above second example with the third example.

In FIG. 13(a), similar to FIG. 5(a), there is shown a downlink radio frame format in case that a long CP sub-frame is inserted in between short CP sub-frames on the downlink. Also, in FIG. 13(b), uplink radio frame formats from the terminals UE1, UE2 are shown. Other terminals also transmit data using similar formats. FIG. 13(b) is a combination of FIG. 8 (b) with FIG. 10 (b), and the explanation thereof is omitted to avoid redundant explanation.

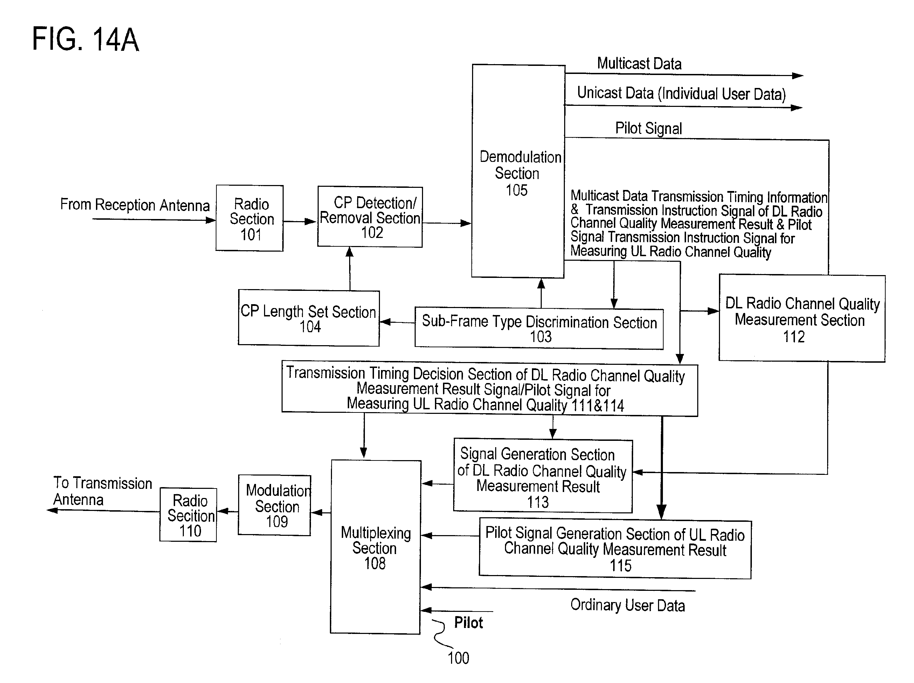

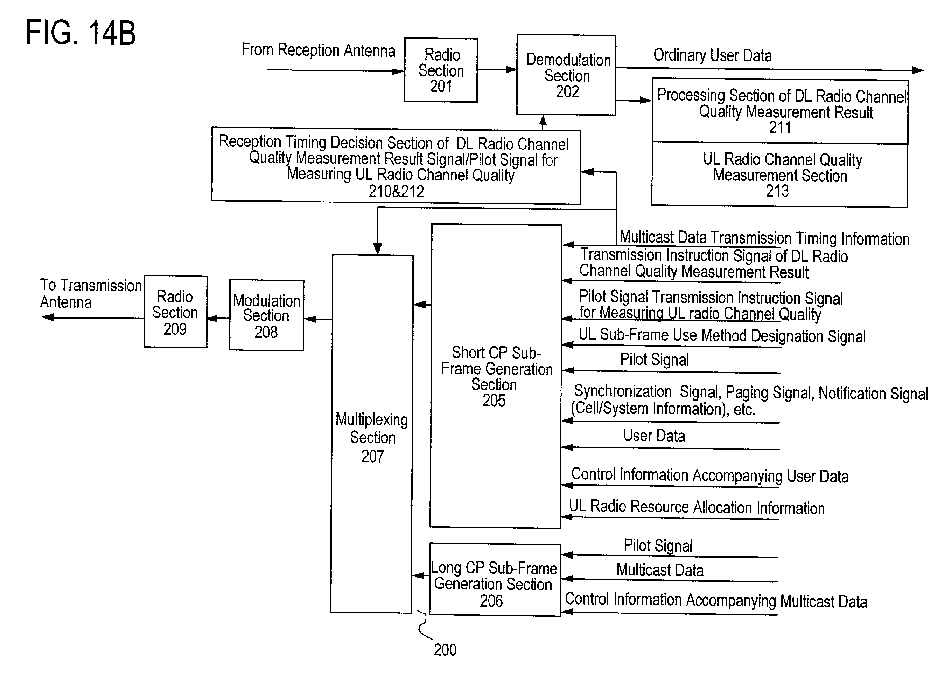

FIGS. 14A and 14B are diagrams illustrating a fourth exemplary configuration of the radio communication system according to the embodiment of the present invention. There is shown an exemplary configuration of transmitting/receiving both a measurement result signal of DL radio channel quality and a pilot signal for measuring UL radio channel quality in an uplink time interval corresponding to a time interval in which multicast data is transmitted on the downlink. FIG. 14A shows a terminal configuration, and FIG. 14B shows a base station configuration. In FIGS. 14A, 14B, identical reference symbols are attached to configuration elements identical or similar to FIGS. 7A, 7B.

The configuration of terminal 100 shown in FIG. 14A is a combination of the configurations shown in FIGS. 9A and 11A, and the explanation thereof is omitted to avoid redundant explanation. Further, the configuration of base station 200 shown in FIG. 14B is a combination of the configurations shown in FIGS. 9B and 11B, and the explanation thereof is omitted to avoid redundant explanation.

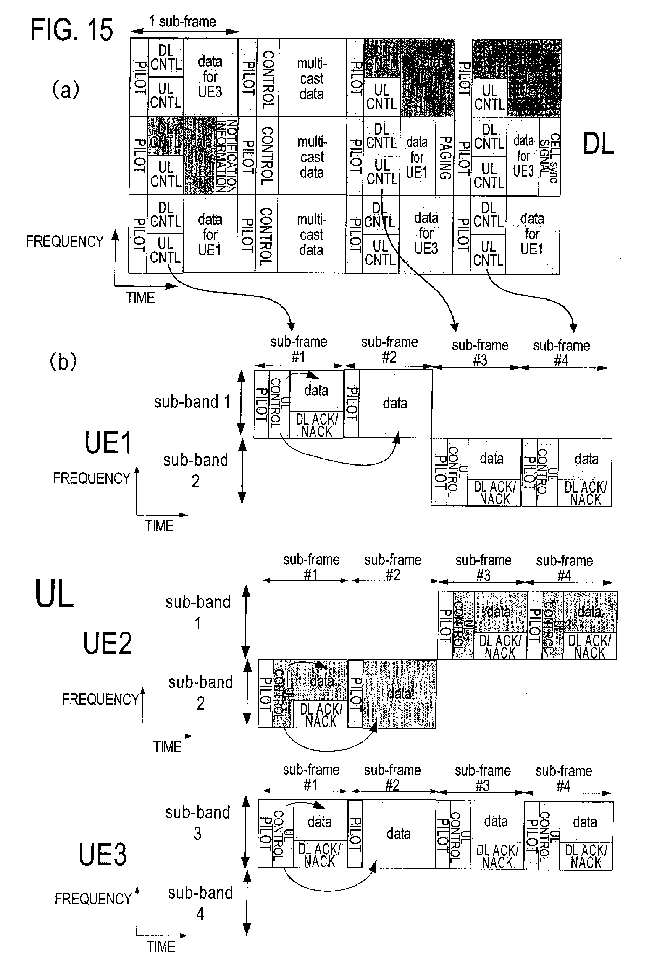

FIG. 15 is a diagram illustrating a fifth example of a signal transmitted by a terminal in an uplink time interval corresponding to a time interval in which multicast data is transmitted on the downlink. In the fifth example, the terminal from which data transmission is permitted in a time interval immediately before the uplink time interval corresponding to the time interval in which multicast data is transmitted (i.e. time interval being time shifted from the time interval in which multicast data is transmitted) is enabled to consecutively transmit data also in the uplink time interval corresponding to the above uplink time interval corresponding to the time interval in which multicast data is transmitted.

It is effective to allocate, to the above time interval, such terminals as having a large data amount for transmission, having a large data transmission delay amount due to the frequent occurrence of retransmission, and being compelled to transmit at a low rate because of being located in the vicinity of cell end. Namely, in a short CP sub-frame immediately before the time interval in which multicast data is transmitted, when radio resource allocation is made to such the terminals for uplink transmission, the allocated terminals can use consecutive two sub-frames implicitly.

In FIG. 15(a), similar to FIG. 5(a), there is shown a downlink radio frame format in case that a long CP sub-frame is inserted in between short CP sub-frames on the downlink. Also, in FIG. 15(b), uplink radio frame formats from the terminals UE1, UE2 and UE3 are shown. Other terminals also transmit data using similar formats.

As shown in FIG. 15(b), when data transmission is permitted in a sub-frame (sub-frame #1 in FIG. 15(b)) immediately before the uplink time interval (interval of sub-frame #2 in FIG. 15(b)) corresponding to the time interval in which multicast data is transmitted on the downlink, data transmission is also performed in the next sub-frame (uplink time interval corresponding to the time interval in which multicast data is transmitted on the downlink) . At this time, there is used an identical sub-band to the sub-band being used in the sub-frame immediately before.

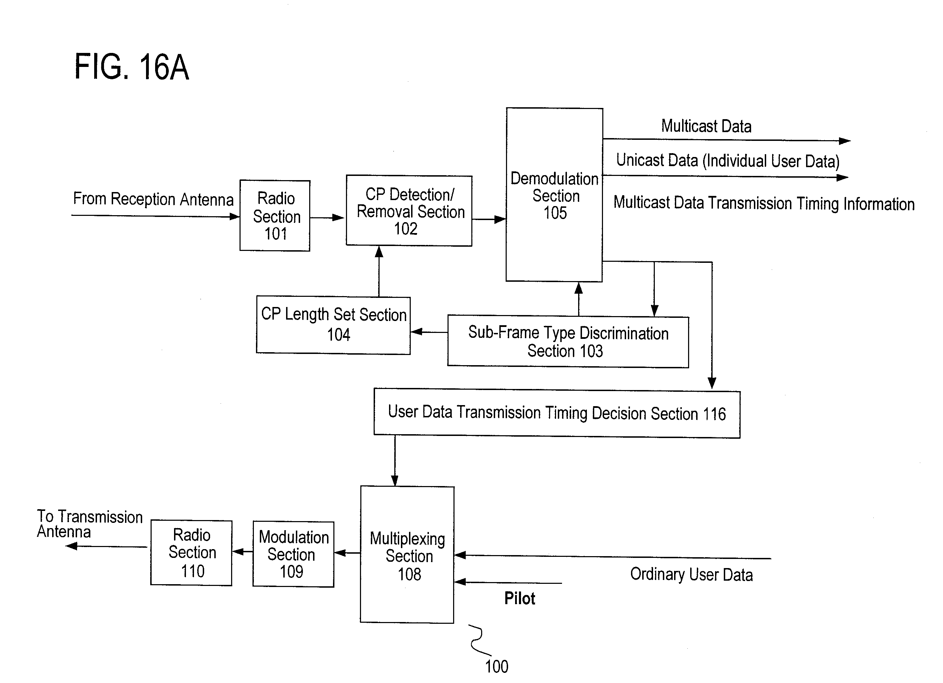

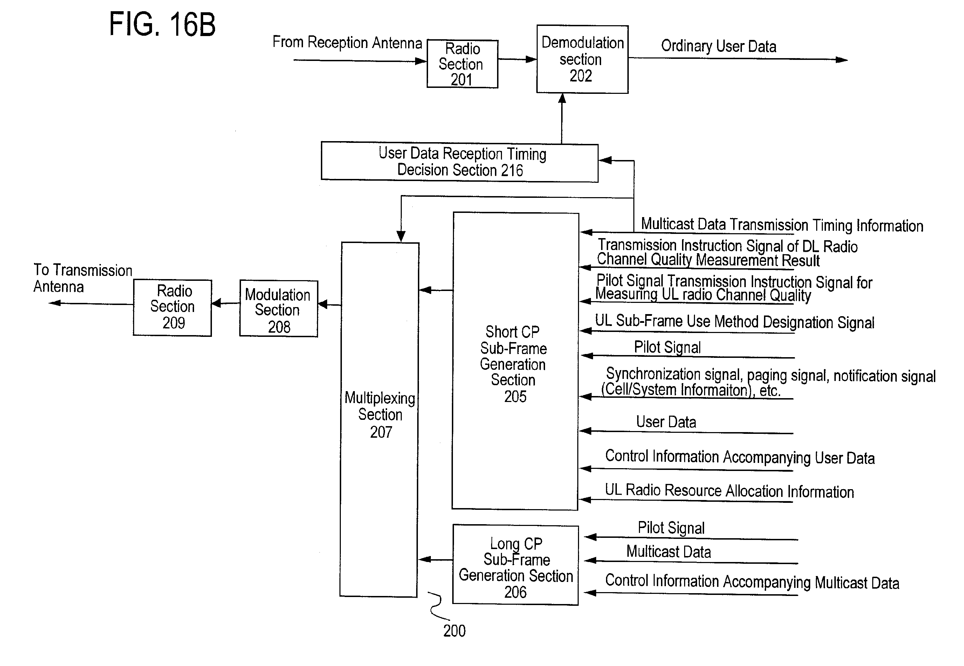

FIGS. 16A and 16B are diagrams illustrating a fifth exemplary configuration of the radio communication system according to the embodiment of the present invention. There is shown an exemplary configuration for transmitting/receiving a user data in an uplink time interval corresponding to a time interval in which multicast data is transmitted on the downlink. FIG. 16A shows a terminal configuration, and FIG. 16B shows a base station configuration. In FIGS. 16A, 16B, identical reference symbols are attached to configuration elements identical or similar to the configuration elements shown in FIGS. 7A, 7B.

The terminal configuration shown in FIG. 16A is a configuration similar to the configuration shown in FIG. 7A, and different points from FIG. 7A will be explained.

A user data transmission timing decision section 117 acquires multicast data transmission timing information being output from demodulation section 105, and based on the above information, decides the uplink time interval (sub-frame) corresponding to the time interval in which multicast data is transmitted on the downlink. When user data is transmitted in the sub-frame immediately before the sub-frame concerned, user data transmission timing decision section 117 controls multiplexing section 108 to transmit user data also in the sub-frame concerned. According to an instruction from user data transmission timing decision section 117, multiplexing section 108 performs time division multiplexing so that the user data is transmitted in the uplink time interval corresponding to the time interval in which multicast data is transmitted on the downlink.

In the configuration shown in FIG. 16B, a demodulation section 202 demodulates the user data from the signal transmitted in the uplink time interval corresponding to the time interval in which multicast data is transmitted on the downlink. By means of a user data reception timing decision section 216, a signal being transmitted in the uplink time interval corresponding to the time interval in which multicast data is transmitted on the downlink is also processed as user data.

As the radio communication system according to the present invention, any of the aforementioned first to fifth examples may be selectable. Namely, how to utilize the uplink time interval corresponding to the time interval in which multicast data is transmitted on the downlink (i. e. which is to be selected among the methods shown in the first to the fifth examples) is notified to the entire terminals either immediately before or several mS to several tens of ms before the multicast data transmission, when the multicast data is transmitted in a long CP sub-frame on the downlink. In case that the above uplink time interval is used for other purposes than the transmission of a random access signal (the first example), an information signal indicating which terminals (plural number) may use the above time interval is also transmitted.

By this, it is possible to decide the operation and working condition etc. of the entire terminals in a cell, and fully utilize the "uplink time interval corresponding to the time interval in which multicast data is transmitted on the downlink" in a flexible manner.

### INDUSTRIAL APPLICABILITY

The present invention is applicable to a radio communication system in which unicast data and multicast data are time-division multiplexed on an identical carrier wave, and an effective use of an uplink time interval corresponding to a time interval in which multicast data is transmitted on the downlink can be attained.

## Claims

1. A radio communication system comprising:
a radio base station transmitting time-division-multiplexed data signals including unicast data and multicast data on an identical carrier wave, and before transmitting the multicast data, transmitting an information signal notifying of the timing to transmit the multicast data; and
a mobile communication terminal receiving the data signal and the information signal from the radio base station, deciding a first uplink time interval, an uplink time interval corresponding to a time interval in which the multicast data is transmitted on a downlink, based on the information signal, and transmitting a predetermined signal in the first uplink time interval either autonomously or according to an instruction from the radio base station.

2. The radio communication system according to claim 1,
wherein, in the first uplink time interval, the mobile communication terminal autonomously transmits a random access signal based on a random access method.

3. The radio communication system according to claim 1,
wherein the radio base station transmits to the mobile communication terminal a signal instructing to transmit a measurement result of downlink radio channel quality, and
wherein, on receiving the signal, the mobile communication terminal measures downlink radio channel quality, and transmits a signal notifying of the measurement result in the first uplink time interval.

4. The radio communication system according to claim 1,
wherein the radio base station transmits to the mobile communication terminal a signal instructing to transmit a pilot signal for measuring uplink radio channel quality, and
wherein, on receiving the signal, the mobile communication terminal transmits the pilot signal for measuring uplink radio channel quality in the first uplink time interval.

5. The radio communication system according to claim 1,
wherein the radio base station transmits to the mobile communication terminal a signal instructing to transmit a measurement result of downlink radio channel quality and a signal instructing to transmit a pilot signal for measuring uplink radio channel quality, and
wherein, on receiving the signals, the mobile communication terminal measures downlink radio channel quality, and transmits a signal notifying of the measurement result and the pilot signal for measuring uplink radio channel quality in the first uplink time interval.

6. The radio communication system according to claim 1,
wherein, when transmitting a data signal in an uplink time interval immediately before the first uplink time interval, the mobile communication terminal autonomously transmits a data signal in the first uplink time interval also.

7. A mobile communication terminal comprising:
a reception unit for receiving, from a radio base station, time-division-multiplexeddata signals including unicast data and multicast data on an identical carrier wave, and before receiving the multicast data, receiving from the radio base station an information signal notifying of the timing for transmitting the multicast data; and
based on the information signal, a transmission unit for deciding the first uplink time interval, an uplink time interval corresponding to a time interval in which the multicast data is transmitted on the downlink, and for transmitting a predetermined signal in the first uplink time interval either autonomously or according to an instruction from the radio base station.

8. The mobile communication terminal according to claim 7,
wherein, in the first uplink time interval, the transmission unit autonomously transmits a random access signal based on a random access method.

9. The mobile communication terminal according to claim 7, further comprising:
a measurement unit for measuring downlink radio channel quality,
wherein the reception unit receives from the radio base station an instruction signal instructing to transmit a measurement result of downlink radio channel quality, and
wherein the measurement unit measures downlink radio channel quality based on the instruction signal, and
wherein, according to the instruction signal, the transmission unit transmits a signal notifying of the measurement result in the first uplink time interval.

10. The mobile communication terminal according to claim 7,
wherein the reception unit receives from the radio base station an instruction signal instructing to transmit a pilot signal for measuring uplink radio channel quality, and
wherein, according to the instruction signal, the transmission unit transmits the pilot signal for measuring uplink radio channel quality in the first uplink time interval.

11. The mobile communication terminal according to claim 7, further comprising:
a measurement unit for measuring downlink radio channel quality,
wherein, from the radio base station, the reception unit receives a first instruction signal instructing to transmit a measurement result of downlink radio channel quality and a second instruction signal instructing to transmit a pilot signal for measuring uplink radio channel quality, and
wherein the measurement unit measures downlink radio channel quality based on the first instruction signal, and
wherein, according to the first and second instruction signals, the transmission unit transmits both a signal notifying of the measurement result and the pilot signal for measuring uplink radio channel quality, in the first uplink time interval.

12. The mobile communication terminal according to claim 7,
wherein, when transmitting a data signal in an uplink time interval immediately before the first uplink time interval, the transmission unit autonomously transmits a data signal in the first uplink time interval also.

13. A radio base station in a radio communication system comprising:
a transmission unit for transmitting time-division-multiplexed data signals including unicast data and multicast data on an identical carrier wave, and before transmitting the multicast data, transmitting to a mobile communication terminal an information signal notifying of the timing for transmitting the multicast data, and
based on the information signal, a reception unit for receiving a predetermined signal transmitted from the mobile communication terminal in a first uplink time interval, an uplink time interval corresponding to a time interval, in which the multicast data is transmitted on the downlink, decided by the mobile communication terminal based on the information signal.

14. The radio base station according to claim 13,
wherein the reception unit receives a random access signal based on a random access method, transmitted from the mobile communication terminal in the first uplink time interval

15. The radio base station according to claim 13,
wherein the transmission unit transmits to the mobile communication terminal a signal instructing to transmit a measurement result of downlink radio channel quality, and
wherein the reception unit receives a signal notifying of the measurement result of downlink radio channel quality, transmitted from the mobile communication terminal in the first uplink time interval.

16. The radio base station according to claim 13,
wherein the transmission unit transmits to the mobile communication terminal a signal instructing to transmit a pilot signal for measuring uplink radio channel quality, and
wherein the reception unit receives the pilot signal for measuring uplink radio channel quality, transmitted from the mobile communication terminal in the first uplink time interval, and
wherein the radio base station includes a measurement unit for measuring uplink radio channel quality based on the pilot signal for measuring uplink radio channel quality.

17. The radio base station according to claim 13,
wherein the transmission unit transmits to the mobile communication terminal a signal instructing to transmit a measurement result of downlink radio channel quality and a signal instructing to transmit a pilot signal for measuring uplink radio channel quality, and
wherein the reception unit receives a signal notifying of the measurement result of downlink radio channel quality and the pilot signal for measuring uplink radio channel quality, transmitted from the mobile communication terminal in the first uplink time interval, and
wherein the radio base station includes a measurement unit for measuring uplink radio channel quality based on the pilot signal for measuring uplink radio channel quality.

18. The radio base station according to claim 13,
wherein, subsequent to an uplink time interval immediately before the first uplink time interval, the reception unit receives a data signal from the mobile communication terminal in the first uplink time interval also.
